Europäisches Patentamt

European Patent Office

Office européen des brevets

(19)

(11) Publication number: **0 130 471**
**A2**

# (12) EUROPEAN PATENT APPLICATION

(21) Application number: **84107047.7**

(22) Date of filing: **20.06.84**

(51) Int. Cl.⁴: **G 06 F 13/18,** G 06 F **15/16**

(30) Priority: **05.07.83 US 511051**

(43) Date of publication of application: **09.01.85**
**Bulletin 85/2**

(84) Designated Contracting States: **DE FR GB**

(71) Applicant: **International Business Machines Corporation,**
**Old Orchard Road, Armonk, N.Y. 10504 (US)**

(72) Inventor: **Vogelsberg, Robert Eric, 1345 A Bear Mt. Dr.,**
**Boulder Colorado 80303 (US)**

(74) Representative: **Savi, Camillo et al, IBM Italia S.p.A.**
**Direzione Brevetti MI-SEG-555 P.O.Box 137,**
**I-20090 Segrate (Milano) (IT)**

(54) **Interface controller for connecting multiple asynchronous buses and data processing system including such controller.**

(57) A synchronization and prioritization circuit is provided to connect multiple, independent, asynchronous master bus systems to a slave bus system. The circuit includes means (202, 200; 203, 201) for the resolution of metastable conditions and means (G1, G2) for arbitrating between simultaneously received requests (105A, 105B) from different bus masters.

Interface controller for connecting multiple asynchronous buses and data
processing system including such controller

This invention relates to data processing systems and more particularly to
independent asynchronous systems which are connected through interface
circuitry to a shared resource such as a shared memory.

Multiprocessor systems which contend for a shared resource have been in
existence for a number of years. For example, multi-microprocessor systems
have come into use in which information is passed from one microprocessor
system to another through the use of shared resources such as a disk file or
a two-port memory. Mediating priority for access to the shared resource
among master bus systems is necessary and various techniques have been
devised for resolving contention.

U.S. Patent No. 4,212,057 is an example of a prior art shared resource
multiprocessor system with provision for resolving contention for the shared
resource. However, that patent does not provide for the metastability which
can occur in asynchronous circuits and it does not provide for resolution of
contention in all cases. The instant invention can be considered an
improvement to the prior art represented by that patent.

The invention as claimed is a particularly advantageous interface system
which handles simultaneously received requests for a slave bus from
different, independent asynchronous master bus systems. The problem solved
by the instant invention includes means for stabilizing a bus request signal
received from a master bus concurrently with a change in the clock signal of
the interface circuitry as well as resolving simultaneously received bus
request signals from more than one master.

The invention provides an interface to connect more than one independent
asynchronous master bus system with a slave bus. The interface circuitry
synchronizes bus requests and removes the possibility of metastable
conditions occuring prior to the initiating of a Bus Granted Signal. The
circuitry also provides gating logic to arbitrate, in all cases, the reception of simultaneously received signals from more than one bus master.

The above-mentioned and other features and objects of this invention and the manner of attaining them will become more apparent and the invention itself will best be understood by reference to the following description of embodiments of the invention taken in conjunction with the accompanying drawings, the description of which follows.

Figure 1 is a block diagram showing a typical system in which the instant invention is used.

Figures 2, 2A, and 3 are block diagrams showing alternate types of systems in which the instant invention can be used.

Figure 4 shows drive circuits for connecting data address and control buses in the system of Figure 1.

Figure 5 provides a timing map for use with Figure 6 illustrating a protocol for transferring data.

Figure 6 shows an implementation of bus synchronization and priority control logic in accordance with the instant invention.

Figure 7 shows an implementation of gating logic for modifying Figure 6 when the system of Figure 2A is used.

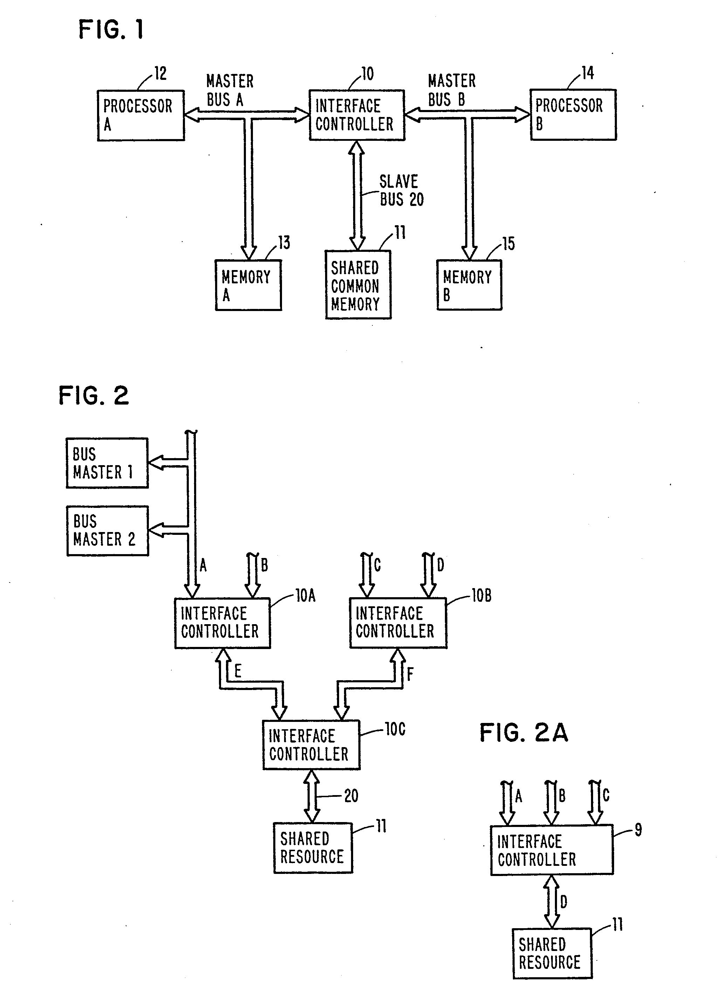

Figure 1 is a block diagram showing a typical and basic system in which the interface controller of the instant invention can be used. In the system, data processor 12 is connected over master bus A to a local memory 13 and to the interface controller 10. A second data processor 14 is connected over master bus B to local memory 15 and to the interface controller 10. Through the mediation of the interface controller 10, subject of the instant invention, each of the data processors 12 and 14 are connected to a shared common memory 11 over a slave bus 20.

A second configuration in which the interface controller of the instant invention can be used is shown in Figure 2 whereby more than one interface controller is connected in series in order that a plurality of independent asynchronous buses can gain access to a shared resource. In Figure 2, interface controller 10A arbitrates the control of slave bus E between master bus systems A and B. Similarly, interface controller 10B arbitrates control of slave bus F between master bus systems C and D. Interface controller 10C recognizes buses E and F as master bus systems and arbitrates their access to slave bus 20 to which the shared resource 11 is connected. In that manner, any of the four master bus systems A, B, C, and D have access to the shared resource 11. Note that there could be several shared resources on the slave bus such as memories, printers, disk files, tape files, etc.

Figure 2 also shows that a bus system can be driven by more than one bus master. In Figure 2, master bus A is shown with two bus masters, which may be two independent, synchronous or asynchronous processing systems. Obviously, some type of arbitration scheme will be provided so that only one of the bus masters controls master bus A at any one time.

Figure 2A shows an alternate configuration to that of Figure 2 for connecting three master buses (as shown) or more to a slave bus.

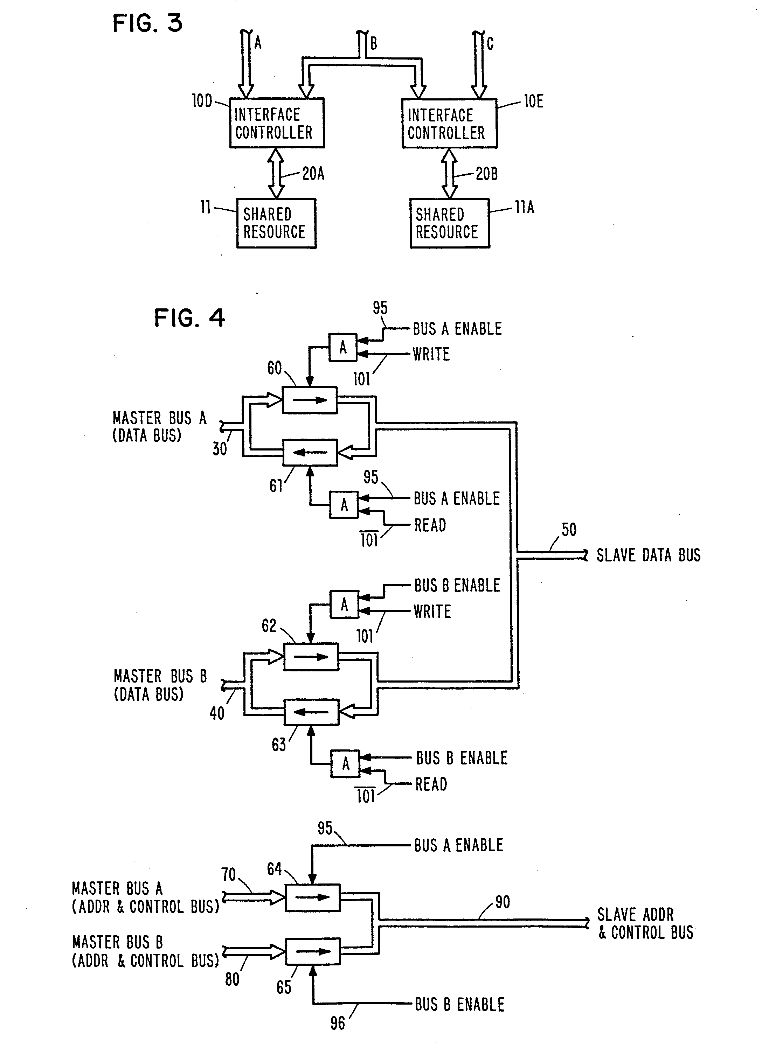

Figure 3 shows still another configuration in which the interface controller of the instant invention can be used wherein the interface controller 10D arbitrates between signals received from master bus system A and master bus system B in order to provide access through slave bus 20A to a shared resource 11. Similarly, interface controller 10E arbitrates between master bus system B and master bus system C to grant access over slave bus 20B to a shared resource 11A.

In the system of Figure 3, master bus system B controls that information which is accessible to the other two master systems. Master bus systems A and C communicated through master bus system B since system B can obtain information stored by system C in shared resource 11A and transfer it to shared resource 11 so that it can be accessed by master bus system A.

The details of the operation of the interface controller units shown in Figures 1, 2, 2A, and 3 will be explained below with reference to Figures 4, 5, and 6 as applied to the basic system shown in Figure 1 and it is to be understood that the principles are applicable to any type of system such as that shown in Figure 2 or Figure 3 or any other.

Figure 4 shows data bus, address bus, and control bus interconnections at the interface controller 10 of Figure 1. Data bus 30 for the master bus system A is connected to a slave data bus 50 through connecting drivers 60 and 61. Drive circuit 60 is used to write data present on bus 30 into a shared memory 11 located on bus 50 while connecting driver 61 is used to transfer data read from shared memory 11 on slave bus 50 onto data bus 30. Similarly, data bus 40 of master bus system B is connected through driver 62 to slave bus 50 for writing information into a memory located on slave bus 50 while driver 63 connects slave bus 50 to data bus 40 for transferring data read from the shared resource to the master bus system B.

Address and control bus 70 for master bus system A is connected through drive circuit 64 to the address and control bus 90 of the slave system. Address and control bus 80 of master bus system B is connected through drive circuit 65 to slave address and control bus 90. While not shown in Figure 4, there would be a similar interconnection with the directions of the drivers reversed for connecting slave response signals from bus 90 to address and control buses 70 and 80.

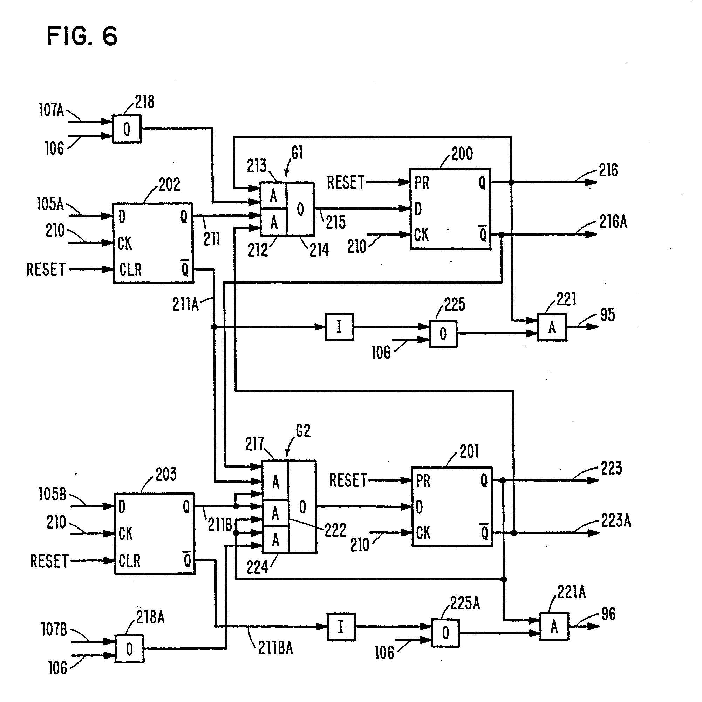

Thus in the circuit shown in Figure 4, by the proper selection of the drive circuits, a master bus system can transfer data to a slave bus at a designated address and the slave bus can respond to the master bus system. Note that drive circuits 60 and 61, as well as drive circuit 64, operate upon the presentation of a control signal 95 indicated to be "Bus A Enable". Similarly, drive circuits 62, 63, and 65 operate when the Bus B Enable control signal is present. The generation of these enabling signals is accomplished by an arbitration circuit shown in Figure 6 which resolves contention for the drive circuits if requests are received simultaneously.

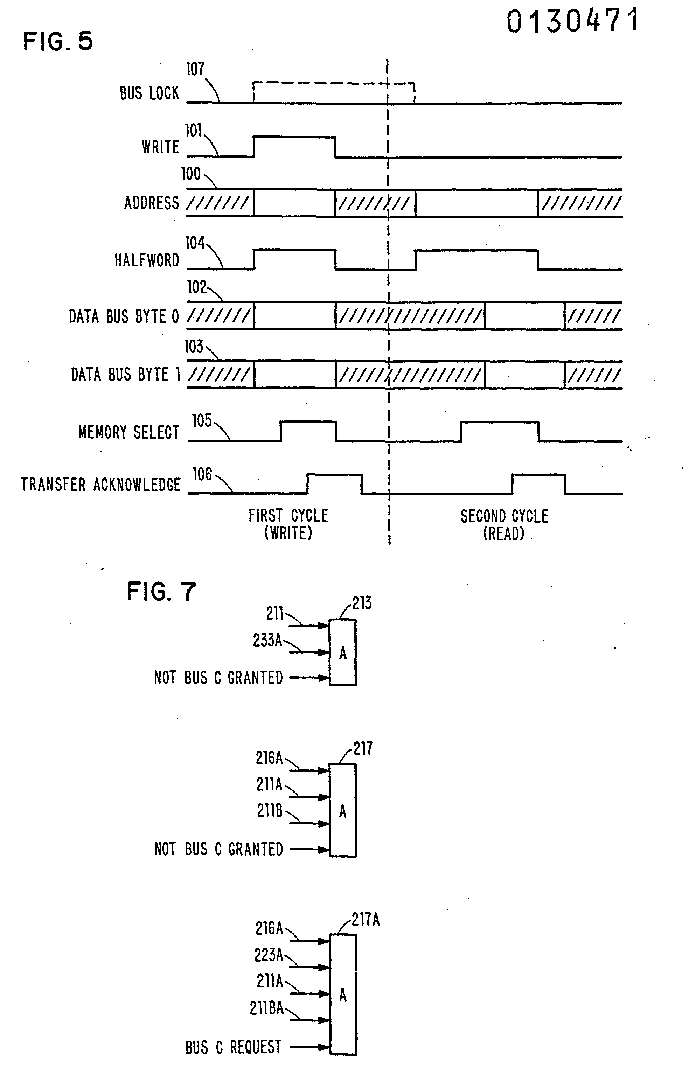

Prior to discussing Figure 6, an illustrative communication protocol for use with that circuit will be explained with reference to Figure 5. In Figure 5, in a first cycle, Address Signals 100 are placed by a bus master onto bus A, for example, simultaneously with the presentation of a Write Signal 101 and Data Signals 102 and 103. The presence of the control Half-word Signal 104 indicates that both of the Data Signals 102 and 103 contain valid information. (If the Half-word Signal is not present, only one set of the Data Signals 102 or 103 would be valid as determined by the low order address bit.) After these signals are presented and placed upon the respective address, control, and data buses, a Memory Select Signal 105 is raised on the control bus. This signal indicates that the address and data on the respective buses are valid.

When the receiving device addressed by Address Signals 100 has processed the data, it provides a Transfer Acknowledge Signal 106 which is sent back to the originating bus master. Upon receipt of the Transfer Acknowledge Signal 106 the Memory Select Signal 105, Address Signals 100, Data Signals 102 and 103, Write Signal 101 and Half-word Signal 104 are deactivated. In response to the deactivation of the Memory Select Signal 105, the addressed device drops the Transfer Acknowledge Signal 106 thus completing the communication protocol and ending the bus cycle.

Figure 5 also shows a second bus cycle in which a read operation is performed, that is, Write Signal 101 is not activated when Address Signals 100 and Half-word Signal 104 are activated. Next, the bus master activates the Memory Select Signal 105 as an indication that the address and data on the respective buses are valid. Upon processing the read request, the addressed device places Data Signals 102 and 103 on the bus and raises the Transfer Acknowledge Signal 106 as an indication that the data on the bus is valid. Upon reception of these signals, the bus master drops its Memory Select Signal, Address Signals, Write and Half-word Signals. The deactivation of the Memory Select Signal causes the device to drop its Transfer Acknowledge Signal and Data Signals. In that manner, a second bus cycle, this time a read cycle, is completed. Figure 5 also shows a Bus Lock Signal 107 which may be activated by a bus master to maintain control of the bus for multiple sequential bus cycles.

With reference to Figure 6, a circuit is shown that operates in accordance with the protocol shown in Figure 5 and shows an implementation of interface circuitry making use of the instant invention. In Figure 6, latches 200 and 201 are cross-connected in a circuit used for bus priority control logic. The circuit of Figure 6 adds two additional latches 202 and 203 to prevent metastable conditions from being propagated to the control latches 200 and 201. The AND/OR gating circuits G1 and G2 are used to secure a resolution of simultaneous requests from the different bus masters.

Metastability in aynchronous circuits occurs when the received drive signal changes state at the same time that the clock signal is changing state. This does not occur in a synchronous circuit because, by definition, that circuit does not allow drive signals to occur simultaneously with a clock signal. Since the instant invention is concerned with connecting two asynchronous circuits, that is, the master and the slave are asynchronous to each other, the possibility of latch 202, for example, going into a metastable condition is clearly present. This will occur if the Bus A Request Signal 105A is received simultaneously with a change in the clock signal 210. When such an event occurs, the output signal 211 of latch 202 is unpredictable since the energy received from signal 105A may be insufficient to clearly cause the latch to take the state indicated by the signal. The result is that the latch 202 can oscillate between high and low states or it can settle at an intermediate state on its transfer response characteristic.

After a period of such metastability, the latch will take one or the other of its designated outputs, high or low. Since the resulting output signal 211 can be either high or low, it will be indeterminate as to whether the latch indicates the presence of a Bus A Request Signal 105A at its input. In any event, the output of latch 202 will be a stable signal after the period of metastability passes. The circuit of Figure 6 resolves the metastability problem by providing a clock signal 210 that is longer in duration than the period of metastability in latch circuit 202. As a result, the combination of latch circuits 200 and 202 always provide a stable signal 215 at the input of latch 200 upon the change of a clock pulse 210. Since that is the case, predictability of the signals present in the logic circuits downstream of latch 200 is guaranteed. Since the Bus A Enable Signal 95 which operates the drive circuits 60, 61, and 64 in Figure 4 is generated downstream of latch 200, it is guaranteed that signal 95 is predictable. The latch circuits 203 and 201 perform in a manner similar to latches 200 and 202 in the connection of independent asynchronous master bus B to the slave bus.

The Bus A Request Signal 105A is derived from the Bus A Address Signal 100 and the Memory Select Signal 105 shown in Figure 5. It indicates that a Bus A Memory Select Signal 105 has been generated for a range of addresses which are assigned to the slave bus. The signal 105A is generated through a simple decode of the appropriate address bits and the Memory Select Signal 105.

In operation of the circuit shown in Figure 6, Bus A Request Signal 105A acts as a request presented by Bus A to latch 202 asking for connection to the slave bus. Upon the reception of signal 105A and the occurrence of the next clock pulse 210, latch circuit 202 changes state to indicate the presence of the request signal 105A. Signal 211, the output of latch 202, is combined in AND gate 212 with signal 223A which indicates whether Bus B already has access to the slave bus. If the slave bus is free, the requirements of AND circuit 212 are satisfied and the Bus Request Signal is passed through OR circuit 214 to provide an input signal 215 to the latch 200. When latch 200 receives signal 215 signifying a Bus A Request Signal, and upon the occurrence of the next clock pulse 210, Bus A Granted Signal 216 is raised. The complement of that signal, signal 216A, is fed back to the input of AND circuit 217 to prevent the passage of any subsequently issued Bus B Request Signal 105B present on Bus B.

The Bus A Granted Signal 216 remains active as long as the Bus A Request Signal remains active. Note, however, that the Bus A Granted Signal 216 can remain active after the Bus A Request Signal 105A has been deactivated. This is due to the presence of the Transfer Acknowledge Signal 106 as an input through OR circuit 218 to AND circuit 213. Since AND circuit 213 combines the Transfer Acknowledge Signal 106 with Bus A Granted Signal 216, this feedback loop will continue the activation of the Bus A Granted Signal until such time as the Transfer Acknowledge Signal is deactivated. An additional input at OR circuit 218 is the Bus A Locked Signal 107A which can be activated to provide more than one bus cycle to a particular bus master. In that instance, the dropping of the Memory Select and Transfer Acknowledge signals does not destroy the presence of the Bus A Granted Signal and thus a second consecutive bus cycle can be commenced by the bus master which has issued the Bus A Locked command.

With reference again to Figure 4, note that the drive circuits 60 and 61 which connect the data bus of master bus system A to the slave data bus are driven by the presence of a Bus A Enable Signal 95. That signal is provided in Figure 6 through AND circuit 221 which combines the Bus A Granted Signal 216 with the complement of the Bus A Request Signal 211A inverted to indicate an active Bus A Request Signal. In that manner, the Bus A Enable Signal 95 is activated by the operation of latches 200 and 202. Note, however, that when the Memory Select Signal 105 is deactivated (which deactivates Bus A Request Signal 105A and changes the state of signal 211A) and when the Transfer Acknowledge Signal 106 is deactivated, the result will be a dropping of the Bus A Enable Signal even if the Bus A Granted Signal 216 continues in operation due to the presence of a Bus A Locked Signal 107A. Thus, if a second consecutive bus cycle is to be provided, the drive circuits selected can change from one direction to the other, i.e., from a write connection to a read connection, or vice versa.

If the Bus A Request Signal 105A occurs prior to a Bus B Request Signal 105B, the connection for Bus A will be made and signal 216 will have been raised as described above. Since signal 216A is fed into the AND circuit 217, that circuit will prevent the passage of the Bus B Request Signal 211B. Should signal 211B be raised before the granting of Bus A and the raising of signal 216, AND circuit 217 will still prevent the passage of signal 211B if signal 211A is dropped. In this manner, if two simultaneous requests 105A and 105B are passed through the latches 202 and 203 to raise signal 211B and drop signal 211A simultaneously, the interconnection of these signals in circuit 217 will prevent the passage of signal 211B. As a consequence, the Bus A will receive connection to the slave bus and its operation will continue to completion after which the presence of signal 211B will transfer control of the slave bus to Bus B for response to its request. Thus, the circuit 217 provides means for arbitrating between two simultaneously received requests from each of the independent asynchronous master bus systems.

The remainder of the logic shown in Figure 6 relating to Bus B operates similarly to that shown for Bus A. For example, should Bus A be inactive and the Bus B Request Signal 105B be activated, that signal will pass through circuit 217 to the input of latch 201 and upon the occurrence of next clock cycle, the Bus B Granted Signal 223 will be activated. That signal, 223, is fed back to AND circuits 222 and 224 so that the signal 223 is latched while the Bus Request Signal 105B is active and until the Transfer Acknowledge Signal 106 becomes inactive or until the Bus B Locked Signal 107B is deactivated. The Bus B Enable Signal 96 is activated upon the occurrence of the Bus B Granted Signal and dropped upon the deactivation of the Transfer Acknowledge Signal in a manner similar to that described above with reference to Bus A.

Should it be desired to connect more than two independent asynchronous buses to a slave bus, the circuit shown in Figure 2 can be used with duplicate interface controllers such as shown in Figure 6.

An alternate choice for connecting more than two buses to the slave bus is to implement a controller 9 in a configuration like that of Figure 2A. The detailed implementation of controller 9 is an extension of that shown in Figure 6. Implementing such a controller requires the addition of a third set of latches and gating logic for Bus C corresponding to latches 203 and 201 and gates 218A, 217, 222, 224, 225A, and 221A. Figure 7 shows the additional modifications required. In figure 7, AND gate 213 has an additional input, Not Bus C Granted, to prevent granting of Bus A once Bus C has been granted. Similarly, AND gate 217 has the same input to prevent granting of Bus B once Bus C has been granted. The logic added for Bus C includes AND gate 217A, corresponding to AND gate 217 in the Bus B logic, with the following modifications. AND gate 217A contains input lines from both Bus A and Bus B circuits so that either Bus A or Bus B will gain access to the slave bus in preference to Bus C if simultaneous requests are generated. The conditions shown in Figure 7 are 1) Bus A has not been granted access, signal 216A, 2) Bus B has not been granted access, signal 223A, 3) Bus A has not requested access, signal 211A, and 4) Bus B has not requested access, signal 211BA. If all conditions are satisfied, Bus C gains access to the slave bus. Obviously, the principle described here can be extended to arbitrate contention from a fourth bus or more as desired.

A person of skill in the art will recognize that data, address data, and control signals are connected through the interface controller circuit of Figure 6 from a master bus to a slave bus and vice versa but the timing protocol of Figure 5, generated originally by the bus master, is lost. Consequently, additional interface circuitry is needed to reestablish timing differential between the placement of data and address data on the slave bus and passage of the control signal, Memory Select. Similarly, response from the bus devices contains a timing differential for the Transfer Acknowledge Signal as shown in Figure 5.

Since circuits to delay or skew control signals such as the Memory Select Signal and the Transfer Acknowledge Signal relative to other signals are well within the skill of the art, and since such circuits form no part of the instant invention, they are not shown here. However, it is noted that reestablishment of the protocol timings is necessary when asynchronous circuits are interconnected.

Thus, a circuit has been described which prevents the passage of metastable conditions as a result of the reception of an asynchronous signal and which also provides for the arbitration of simultaneously received requests from two different asynchronous signals so that two independent bus systems can be connected to an asynchronous slave bus without the possibility of indeterminate logic conditions.

While the invention has been particularly shown and described with reference to a preferred embodiment thereof, it will be understood by those skilled in the art that the foregoing and other changes in form and details may be made therein without departing from the spirit and scope of the invention.

Claims:

1. An interface controller for selectively connecting two or more asynchronous master bus systems (A, B, C, D) to a slave bus system (20, 20A, 20B) whereby one or more bus masters attached to each of said master bus systems are connected to one or more shared resources (11, 11A) attached to said slave bus system (20, 20A, 20B), characterized in that said interface controller comprises resolving means (202, 200; 203, 201) for receiving a request signal (105A, 105B) from a master bus system (A, B) indicative of a request for connection to said slave bus system (20, 20A, 20B) and for resolving any metastable condition resulting from receiving said signal (105A, 105B) and for producing an always stable output signal (211, 211B) and arbitration means (G1, G2) connected to said resolving means (202, 200; 203, 201) for arbitrating between simultaneously received request signals (105A, 105B) from different master bus systems (A, B) to grant first access to said shared resource (11, 11A) to the higher priority master bus system.

2. The interface controller of claim 1 wherein said resolving means (202, 200; 203, 201) for resolving metastable conditions comprise: a first latch means (202) to which said request signal (105A) is connected as an input signal and to which a clock signal (210) is connected, the time duration of said clock signal (210) being sufficiently greater than the metastable time period of said latch means (202) so that any metastable condition in said latch means (202) caused by reception of said request signal (105A) simultaneously with a change of state in said clock signal (210) is resolved prior to the occurrence of the next subsequent clock signal (210) so that the output signal (211) of said first latch (202) is stabilized and a second latch means (200) whose input terminal is connected to receive the output signal (211) of said first latch means (202) and to which said clock signal (210) is connected to provide clock signals simultaneously with those received by said first latch means (202), for processing said always stable output signal (211) and for producing an enable signal (95) to control the connection of said master bus system to said slave bus system.

3. The interface controller of claim 1 or 2 wherein said arbitration means

(G1, G2) comprises: first gating means (G1) for passing request signals
(211) from a highest priority master bus system when said slave bus system
is free and second gating means (G2) for passing request signals (211B) from
a lower priority master bus system upon the conditions a) the slave bus is
free, and b) no higher priority master bus system has requested said slave
bus system.

4. The interface controller of claim 3 wherein said first gating means (G1)
is connected to receive the output (211) of said first latch means (202) and
to provide input to said second latch means (200) for handling request
signals from the highest priority master bus system and wherein said second
gating means (G2) is connected to receive the output (211B) of a third latch
means (203) identical to said first latch means (202) and to provide input
(211B) to a fourth latch means (201) identical to said second latch means
(202) for handling request signals from a lower priority master bus system.

5. A data processing system including the interface controller of any claims
1 to 4 further including: a first master bus system to which one or more bus
masters are connected, and comprising a first data bus (30) and a first
address and control bus (70), a second master bus system to which one or
more bus masters are connected, and comprising a second data bus (40) and a
second address and control bus (80), a slave bus system to which one or more
shared resources are connected, and comprising a third data bus (50) and a
third address and control bus (90), data bus interconnecting means (60, 61;
62, 63) for connecting either the first (30) or second (40) data bus
dependent upon which master bus system is selected for connection by said
interface controller to the data bus (50) of the slave bus system, said data
bus interconnecting means (60, 61; 62, 63) for receiving and responding to
said always stable output signal (211, 211B) to interconnect the selected
master bus with said slave bus and address and control bus interconnecting
means (64, 65) for connecting the first (70) or the second (80) address and
control bus dependent upon which master bus system is selected for
connection by said interface controller to the address and control bus (90)
of the slave bus system, said address and control bus interconnecting means
(64, 65) for receiving and responding to said always stable output signal

- 14 -

(211, 211B) to interconnect the selected master bus with said slave bus.

0130471

## FIG. 1

## FIG. 2

## FIG. 2A

0130471

## FIG. 3

## FIG. 4

0130471

FIG. 5

| | FIRST CYCLE (WRITE) | SECOND CYCLE (READ) |

FIG. 7

## FIG. 6